# EUROPEAN PATENT APPLICATION

(11) **EP 4 454 518 A1**
(43) Date of publication of application: **30.10.2024**
(21) Application number: 24169256.5
(22) Date of filing: 09.04.2024
(51) Int. Cl.: A47J 27/08

(54) **COOKING DEVICE, CONTROL METHOD AND APPARATUS FOR SAME, AND STORAGE MEDIUM**

(30) Priority: 10.04.2023 CN 202310379521
(71) Applicant: Foshan Shunde Midea Electrical Heating Appliances Manufacturing Co., Ltd., Foshan, Guangdong 528311 (CN)
(72) Inventor: LIANG, Mengjie, Foshan (CN); REN, Pengbo, Foshan (CN)
(74) Representative: Ran, Handong

(57) **Abstract**

The present application relates to a cooking device, a control method for the cooking device, an apparatus for the cooking device, and a storage medium. The control method includes: obtaining a cooking parameter of the cooking device at each cooking stage when the cooking device initiates a cooking function; determining a water volume level of the cooking device based on the cooking parameter of the cooking stage; and adjusting heating power of the cooking device based on the water volume level, to meet cooking demands of the cooking device at different water volumes. Therefore, first determining the water volume level of the cooking device accurately based on the cooking parameter, and then adjusting the heating power of the cooking device by the determined water volume level, which may not only meet the requirement of no pressure overshoot when cooking at a low water rate, but also shorten the overall cooking time when cooking at a high water volume rate.

## Description

### FIELD

The present application relates to the field of home appliance control technologies, and more particularly, to a control method for a cooking device, a computer-readable storage medium, a cooking device, and an apparatus for a cooking device.

### BACKGROUND

Increasing cooking power of a pressure cooker is one method to improve a cooking result and a cooking speed of the pressure cooker. A conventional pressure cooker has cooking power of up to 2,200 W. However, with an increase in the cooking power, after cooking is completed, pressure overshoot often occurs in the pressure cooker due to thermal inertia of a heating plate. In view of this situation, a method adopted in the related art is to apply moderate power for cooking at a beginning of operation of the pressure cooker, and then perform heating based on power corresponding to a water volume subsequent to a determination of the water volume. However, in the related art, a small water volume may only be determined as low as 500 ml, which fails to meet a quick cooking demand of recipes requiring a water volume of 50 ml to 100 ml. Therefore, there is still a risk of overshoot. In addition, since the pressure cooker may only be heated with moderate power for cooking at the beginning, overall cooking time is long, which cannot cater to high-power quick product cooking.

### SUMMARY

The present application aims to solve at least one of the technical problems in the related art to some extent. To this end, a first object of the present application is to provide a control method for a cooking device, capable of not only avoiding pressure overshoot during quick cooking with a small water volume, but also shortening overall cooking time for quick cooking with a large water volume.

A second object of the present application is to provide a computer-readable storage medium.

A third object of the present application is to provide a cooking device.

A fourth object of the present application is to provide an apparatus for a cooking device.

To achieve the above objects, in a first aspect, an embodiment of the present application provides a control method for a cooking device. The control method includes: obtaining a cooking parameter of the cooking device at each cooking stage when the cooking device initiates a cooking function; determining a water volume level of the cooking device based on the cooking parameter of the cooking stage; and adjusting heating power of the cooking device based on the water volume level, to meet cooking demands of the cooking device at different water volumes.

With the control method for the cooking device according to the embodiments of the present application, the water volume level of the cooking device is accurately determined based on the cooking parameter, and then the heating power of the cooking device is adjusted based on the determined water volume level, to meet cooking demands of the cooking device at different water volumes. Therefore, the pressure overshoot can be avoided during the quick cooking with the small water volume, while the overall cooking time can be shortened for the quick cooking with the large water volume.

In addition, the control method for the cooking device according to the above-mentioned embodiments of the present application may further include the following additional technical features.

According to an embodiment of the present application, the cooking stage includes a detection stage, a first heating stage, a heating-stopping stage, a second heating stage, a pressure-boosting stage, and a pressure-maintaining stage. The cooking parameter includes a pot pressure of the cooking device, a duration of the cooking device at the cooking stage, and a cooking temperature of the cooking device at the cooking stage.

According to an embodiment of the present application, the control method further includes: controlling the cooking device to enter the detection stage subsequent to an initiation of the cooking function, and controlling the cooking device to enter the first heating stage and performing timing when a duration of the cooking device at the detection stage reaches a first predetermined time period or when the pot pressure of the cooking device reaches a first predetermined pressure; controlling the cooking device to enter the heating-stopping stage and performing timing, when a duration of the cooking device at the first heating stage reaches a second predetermined time period, or when a cooking temperature of the cooking device at the first heating stage reaches a first predetermined temperature, or when the pot pressure of the cooking device reaches a second predetermined pressure, the second predetermined pressure being greater than or equal to the first predetermined pressure; controlling the cooking device to enter the second heating stage and performing timing, when a duration of the cooking device at the heating-stopping stage reaches a third predetermined time period, or when the pot pressure of the cooking device reaches a third predetermined pressure, the third predetermined pressure being greater than or equal to the second predetermined pressure; controlling the cooking device to enter the pressure-boosting stage and performing timing, when a duration of the cooking device at the second heating stage reaches a fourth predetermined time period, or when a cooking temperature of the cooking device at the second heating stage reaches a second predetermined temperature, or when the pot pressure of the cooking device reaches a fourth predetermined pressure, the fourth predetermined pressure being greater than or equal to the third predetermined pressure; controlling the cooking device to enter the pressure-maintaining stage and performing timing, when a duration of the cooking device at the pressure-boosting stage reaches a fifth predetermined time period, or when the pot pressure of the cooking device reaches a fifth predetermined pressure, the fifth predetermined pressure being greater than or equal to the fourth predetermined pressure; and controlling the cooking device to turn off the cooking function, when a duration of the cooking device at the pressure-maintaining stage reaches a sixth predetermined time period.

According to an embodiment of the present application, the determining the water volume level of the cooking device based on the cooking parameter of the cooking stage includes: determining the water volume level of the cooking device as L0, when the cooking device is at the detection stage and the pot pressure of the cooking device reaches a first predetermined pressure.

According to an embodiment of the present application, the control method further includes: at a beginning of the first heating stage of the cooking device, obtaining a first cooking temperature of the cooking device, and at an end of the first heating stage, obtaining a first duration of the cooking device at the first heating stage.

According to an embodiment of the present application, the determining the water volume level of the cooking device based on the cooking parameter of the cooking stage includes: when the cooking device is at the first heating stage, determining the water volume level of the cooking device as L1 when the pot pressure of the cooking device reaches a second predetermined pressure and the first cooking temperature is greater than a predetermined temperature; and determining the water volume level of the cooking device as L2 when the pot pressure of the cooking device reaches the second predetermined pressure and the first cooking temperature is smaller than or equal to the predetermined temperature.

According to an embodiment of the present application, the determining the water volume level of the cooking device based on the cooking parameter of the cooking stage includes: determining the water volume level of the cooking device as L3, when the cooking device is at the heating-stopping stage and the pot pressure of the cooking device reaches a third predetermined pressure.

According to an embodiment of the present application, the control method further includes: at a beginning of the heating-stopping stage of the cooking device, obtaining a second cooking temperature of the cooking device, at a beginning of the second heating stage of the cooking device, obtaining a third cooking temperature of the cooking device, and at an end of the second heating stage, obtaining a second duration of the cooking device at the second heating stage.

According to an embodiment of the present application, the determining the water volume level of the cooking device based on the cooking parameter of the cooking stage includes: at a beginning of the second heating stage of the cooking device, determining the water volume level of the cooking device as L3, when a difference between the third cooking temperature and the second cooking temperature is greater than a temperature threshold, or when the first duration of the cooking device at the first heating stage is smaller than or equal to a time threshold, otherwise, determining the water volume level of the cooking device as L5.

According to an embodiment of the present application, the control method further includes, subsequent to the determining the water volume level of the cooking device as L5: obtaining the heating power based on the water volume level; controlling heating of the cooking device based on the heating power, and obtaining the pot pressure of the cooking device; and determining the water volume level of the cooking device as L4 when the pot pressure of the cooking device reaches a fourth predetermined pressure.

According to an embodiment of the present application, the control method further includes: at the end of the second heating stage and when the pot pressure of the cooking device is below a fourth predetermined pressure, determining the water volume level of the cooking device based on the difference between the third cooking temperature and the second cooking temperature or the second duration of the second heating stage by looking up a table.

According to an embodiment of the present application, the water volume level of the cooking device is controlled as L0 when the cooking device initiates the cooking function.

To achieve the above objects, in a second aspect, an embodiment of the present application provides a computer-readable storage medium. The computer-readable storage medium stores a control program for a cooking device. The control program for the cooking device, when executed by a processor, implements the control method for the cooking device according to the above-mentioned embodiments.

With the computer-readable storage medium according to the embodiments of the present application, the control program for the cooking device stored on the computer-readable storage medium is executed by the processor. Therefore, the pressure overshoot can be avoided during the quick cooking with the small water volume, while the overall cooking time can be shortened for the quick cooking with the large water volume.

To achieve the above objects, in a third aspect, an embodiment of the present application further provides a cooking device. The cooking device includes a memory, a processor, and a control program for a cooking device stored in the memory and executable on the processor. The processor, when executing the control program, implements the above-mentioned control method for the cooking device.

With the cooking device according to the embodiments of the present application, the control program for the cooking device stored in the memory is executed by the processor. Therefore, the pressure overshoot can be avoided during the quick cooking with the small water volume, while the overall cooking time can be shortened for the quick cooking with the large water volume.

To achieve the above objects, in a fourth aspect, an embodiment of the present application further provides a control apparatus for a cooking device. The control apparatus includes: an obtaining module configured to obtain a cooking parameter of the cooking device at each cooking stage when the cooking device initiates a cooking function; a determining module configured to determine a water volume level of the cooking device based on the cooking parameter of the cooking stage; and a control module configured to adjust heating power of the cooking device based on the water volume level, to meet cooking demands of the cooking device at different water volumes.

With the control apparatus for the cooking device according to the embodiments of the present application, the water volume level of the cooking device is accurately determined by the determining module based on the cooking parameter obtained by the obtaining module, and then the heating power of the cooking device is adjusted by the control module based on the water volume level, to meet the cooking demands of the cooking device at different water volumes. Therefore, the pressure overshoot can be avoided during the quick cooking with the small water volume, while the overall cooking time can be shortened for the quick cooking with the large water volume.

Additional aspects and advantages of the present application will be provided at least in part in the following description, or will become apparent at least in part from the following description, or may be learned from practicing of the present application.

### BRIEF DESCRIPTION OF THE DRAWINGS

FIG. 1 is a flowchart illustrating a control method for a cooking device according to an embodiment of the present application.
FIG. 2 is a flowchart illustrating a control method for a cooking device according to another embodiment of the present application.
FIG. 3 is a flowchart illustrating a control method for a cooking device according to yet another embodiment of the present application.
FIG. 4 is a flowchart illustrating a control method for a cooking device according to still yet another embodiment of the present application.
FIG. 5 is a flowchart illustrating a control method for a cooking device according to still yet another embodiment of the present application.
FIG. 6 is a schematic diagram showing a structure of a cooking device according to an embodiment of the present application.
FIG. 7 is a schematic diagram showing a structure of a control apparatus for a cooking device according to an embodiment of the present application.

### DETAILED DESCRIPTION OF THE EMBODIMENTS

Embodiments of the present application will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present application.

A control method for a cooking device, a computer-readable storage medium, a cooking device, and an apparatus for a cooking device according to the embodiments of the present application are described below with reference to the accompanying drawings.

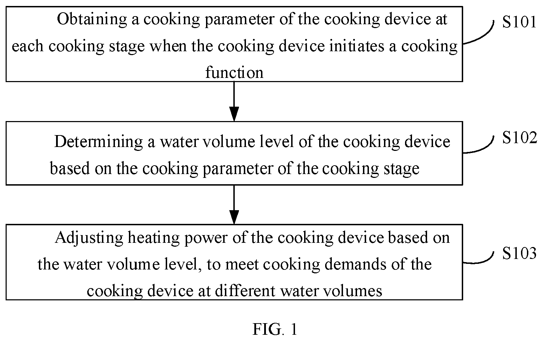

FIG. 1 is a flowchart illustrating a control method for a cooking device according to an embodiment of the present application.

In some embodiments of the present application, as illustrated in FIG. 1, the control method for the cooking device includes the following operations at blocks.

At S 101, a cooking parameter of the cooking device at each cooking stage is obtained when the cooking device initiates a cooking function.

Specifically, in the embodiment, a sensor corresponding to the cooking parameter that need to be obtained may be set in the cooking device. When the cooking device initiates the cooking function, the cooking parameter of the cooking device at each cooking stage is obtained by the sensor. The cooking device has different cooking functions. Typically, different cooking functions have different cooking stages. In an exemplary embodiment of the present application, the cooking stages may be classified based on different cooking results or cooking time periods in the cooking functions.

At S102, a water volume level of the cooking device is determined based on the cooking parameter of the cooking stage.

Specifically, in the embodiment, the cooking parameter may include a pressure, a temperature, or the like of the cooking device. The water volume level of the cooking device may be determined based on different parameters, such as the pressure and the temperature, of the cooking stage. In the embodiments of the present application, different water volume levels may be determined at different cooking stages. Therefore, a current water volume level of the cooking device can be accurately determined while avoiding pressure overshoot.

It should be noted that, the water volume levels of the cooking device include L0, L1, L2, L3, L4, L5, L6, L7, and L8, where L0<Ll<L2<L3<L4<L5<L6<L7<L8. Classification of the water volume levels is not specifically limited in the present application. The water volume levels may also include L9 and L10. In the present application, the water volume level of L8 is a maximum volume of the cooking device.

At S103, heating power of the cooking device is adjusted based on the water volume level, to meet cooking demands of the cooking device at different water volumes.

Specifically, in the embodiment, subsequent to determination of the water volume level of the cooking device based on the cooking parameter of the cooking stage, different water volume levels require different heating power. For example, when the water volume level is L2, a water volume in the cooking device is indicated to be not high, and thus the required heating power is relatively low. When the water volume level is L7, the water volume in cooking device is indicated to be high, and thus the required heating power is relatively high. If heating is performed with low heating power when the water volume level is L7, the cooking result will be unsatisfactory. Therefore, the heating power of the cooking device needs to be adjusted based on the water volume level, to meet cooking demands of the cooking device at different water volume levels.

Further, in some embodiments of the present application, the cooking stage includes a detection stage, a first heating stage, a heating-stopping stage, a second heating stage, a pressure-boosting stage, and a pressure-maintaining stage. The cooking parameter includes a pot pressure of the cooking device, a duration of the cooking device at the cooking stage, and a cooking temperature of the cooking device at the cooking stage.

Specifically, in the embodiment, in the cooking stage, the detection stage is an initial stage for detecting cooking, such as detecting whether the cooking device uses hot water for cooking or detecting whether there is a special situation such as continuous cooking. At the first heating stage, power K2 is adopted for heating to realize a rapid temperature rise. At the heating-stopping stage, the heating is stopped and the residual heat of a heating plate is released. At the second heating stage, power K4 is adopted for heating to realize a rapid temperature rise. At the pressure-boosting stage, power K5 is adopted for heating to rapidly increase a pressure to a specified pressure. At the pressure-maintaining stage, power K6 is adopted for heating to maintain the cooking device at the specified pressure for a period of time.

It should be noted that each of the power K2, the power K4, the power K5, and the power K6 ranges from 0 W to 2,200 W.

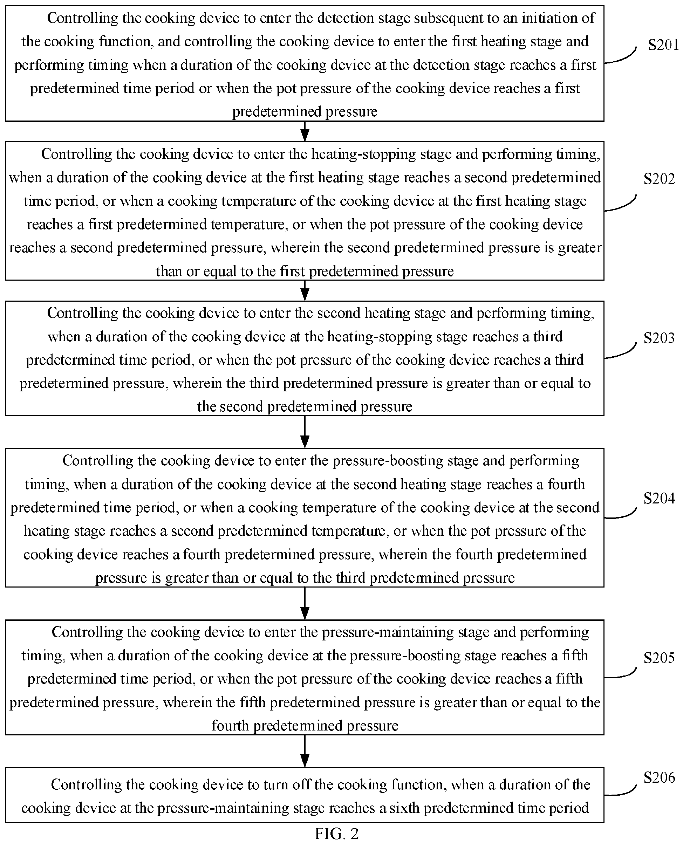

Further, in some embodiments of the present application, as illustrated in FIG. 2, the control method for the cooking device further includes the following operations at blocks.

At S201, the cooking device is controlled to enter the detection stage subsequent to an initiation of the cooking function, and the cooking device is controlled to enter the first heating stage and timing is performed when a duration of the cooking device at the detection stage reaches a first predetermined time period or when the pot pressure of the cooking device reaches a first predetermined pressure.

Specifically, in the embodiment, heating of the cooking device is performed subsequent to the initiation of the cooking function. In this case, the pot pressure of the cooking device increases as the cooking device is heated continuously. That is, the pot pressure is proportional to a pot temperature. The timing is started and the pot pressure of the cooking device is detected subsequent to entry into the detection stage. In addition, the heating is stopped to detect an initial state of the cooking device. The cooking device is controlled to enter the first heating stage and the timing is performed when the duration of the cooking device at the detection stage reaches the first predetermined time period t1 or when the pot pressure of the cooking device reaches the first predetermined pressure P1.

It should be noted that, in some embodiments, the first predetermined time period may preferably be 15 seconds. Further, the first predetermined time period t1 may not be specifically limited in the present application. In addition, in some embodiments, the first predetermined pressure P1 preferably ranges from 0 kpa to 70 kpa.

At S202, the cooking device is controlled to enter the heating-stopping stage and timing is performed, when a duration of the cooking device at the first heating stage reaches a second predetermined time period, or when a cooking temperature of the cooking device at the first heating stage reaches a first predetermined temperature, or when the pot pressure of the cooking device reaches a second predetermined pressure. The second predetermined pressure is greater than or equal to the first predetermined pressure.

Specifically, in the embodiment, when the cooking device is at the first heating stage, heating is performed adopting the power K2. In this case, a temperature of the cooking device rapidly rises, and the pot pressure of the cooking device also continuously increases. The cooking device is controlled to enter the heating-stopping stage and the timing is performed, when the duration at the first heating stage reaches the second predetermined time period t2, or when the cooking temperature of the cooking device at the first heating stage reaches the first predetermined temperature T2, or when the pot pressure of the cooking device reaches the second predetermined pressure P2. The second predetermined pressure P2 is greater than or equal to the first predetermined pressure P1.

It should be noted that, in some embodiments, the second predetermined time period t2 may preferably be 120 seconds, and the first predetermined temperature T2 may preferably be 50 °C. Further, the second predetermined time period t2 and the first predetermined temperature T2 may not be specifically limited in the present application. In addition, in some embodiments, the second predetermined pressure P2 preferably ranges from 0 kpa to 70 kpa.

At S203, the cooking device is controlled to enter the second heating stage and timing is performed, when a duration of the cooking device at the heating-stopping stage reaches a third predetermined time period, or when the pot pressure of the cooking device reaches a third predetermined pressure. The third predetermined pressure is greater than or equal to the second predetermined pressure.

Specifically, in the embodiment, when the cooking device is at the heating-stopping stage, no heating is performed through power. Since the heating plate in the cooking device has heat stored due to the heating at the first heating stage, the heating plate of the cooking device releases heat at the heating-stopping stage to perform heating. In this case, with a release of heat from the heating plate, the temperature of the cooking device continues to rise but at a slow rate, and the pot pressure of the cooking device also continues to increase. The cooking device is controlled to enter the second heating stage and the timing is performed, when the duration of the cooking device at the heating-stopping stage reaches the third predetermined time period t3, or when the pot pressure of the cooking device reaches the third predetermined pressure P3. The third predetermined pressure P3 is greater than or equal to the second predetermined pressure P2.

It should be noted that, in some embodiments, the third predetermined time period t3 may preferably be 20 seconds. Further, the third predetermined time period t3 may not be specifically limited in the present application. In addition, in some embodiments, the third predetermined pressure P3 preferably ranges from 0 kpa to 70 kpa.

At S204, the cooking device is controlled to enter the pressure-boosting stage and timing is performed, when a duration of the cooking device at the second heating stage reaches a fourth predetermined time period, or when a cooking temperature of the cooking device at the second heating stage reaches a second predetermined temperature, or when the pot pressure of the cooking device reaches a fourth predetermined pressure. The fourth predetermined pressure is greater than or equal to the third predetermined pressure.

Specifically, in the embodiment, when the cooking device is at the second heating stage, heating is performed adopting the power K4. In this case, the temperature of the cooking device rapidly rises, and the pot pressure of the cooking device also continuously increases. The cooking device is controlled to enter the pressure-boosting stage and the timing is performed, when the duration at the second heating stage reaches the fourth predetermined time period t4, or when the cooking temperature of the cooking device at the second heating stage reaches the second predetermined temperature T4, or when the pot pressure of the cooking device reaches the fourth predetermined pressure P4. The fourth predetermined pressure P4 is greater than or equal to the third predetermined pressure P3.

It should be noted that, in some embodiments, the fourth predetermined time period t4 may preferably be 30 mins, and the second predetermined temperature T4 may preferably be 105 °C. Further, the fourth predetermined time period t4 and the second predetermined temperature T4 are not specifically limited in the present application. In addition, in some embodiments, the fourth predetermined pressure P4 preferably ranges from 0 kpa to 70 kpa.

At S205, the cooking device is controlled to enter the pressure-maintaining stage and the timing is performed, when a duration of the cooking device at the pressure-boosting stage reaches a fifth predetermined time period, or when the pot pressure of the cooking device reaches a fifth predetermined pressure. The fifth predetermined pressure is greater than or equal to the fourth predetermined pressure.

Specifically, in the embodiment, when the cooking device is at the pressure-boosting stage, heating is performed adopting the power K5. In this case, the temperature of the cooking device continues to rise, and the pot pressure of the cooking device also continuously increases. The cooking device is controlled to enter the pressure-maintaining stage and the timing is performed, when the duration at the pressure-boosting stage reaches the fifth predetermined time period t5, or when the pot pressure of the cooking device reaches the fifth predetermined pressure P5. The fifth predetermined pressure P5 is greater than or equal to the fourth predetermined pressure P4.

It should be noted that, in some embodiments, the fifth predetermined time period t5 may preferably be 30 mins. Further, the fifth predetermined time period t5 may not be specifically limited in the present application. In addition, in some embodiments, the fifth predetermined pressure P5 preferably ranges from 0 kpa to 70 kpa.

At S206, the cooking device is controlled to turn off the cooking function, when a duration of the cooking device at the pressure-maintaining stage reaches a sixth predetermined time period.

Specifically, in the embodiment, when the cooking device is at the pressure-maintaining stage, heating is performed adopting the power K6 to maintain both the temperature and the pressure of the cooking device at the pressure-maintaining stage. Therefore, an optimal cooking result is achieved when the duration of the cooking device at the pressure-maintaining stage reaches the sixth predetermined time period t6. In this way, the cooking device is controlled to turn off the cooking function.

It should be noted that, the sixth predetermined time period t6 may be customized by a user as desired or may be determined based on a corresponding cooking function.

Further, in some embodiments of the present application, the determining the water volume level of the cooking device based on the cooking parameter of the cooking stage includes: determining the water volume level of the cooking device as L0, when the cooking device is at the detection stage and the pot pressure of the cooking device reaches a first predetermined pressure.

Specifically, in the embodiment, a pressure sensor may be set to obtain the pot pressure. Therefore, the water volume level of the cooking device is determined as L0, when the cooking device is at the detection stage and the pot pressure of the cooking device reaches the first predetermined pressure.

It should be noted that when the water volume level of the cooking device is determined as L0, determination of the water volume level ends, and determination of the water volume level at other stages may not be made.

In some embodiments of the present application, the control method further includes: at a beginning of the first heating stage of the cooking device, obtaining a first cooking temperature of the cooking device, and at an end of the first heating stage, obtaining a first duration of the cooking device at the first heating stage.

Specifically, in the embodiment, a timer may be set to obtain the first duration ta of the cooking device at the first heating stage, and a temperature sensor may be set to obtain the first cooking temperature Ta of the cooking device. Therefore, when the cooking device is at the first heating stage, the first cooking temperature Ta of the cooking device is obtained. At the end of the first heating stage, the first duration ta of the cooking device at the first heating stage is obtained. The duration ta at the first heating stage is shorter than or equal to the first predetermined time period t1.

Further, in the embodiment, the determining the water volume level of the cooking device based on the cooking parameter of the cooking stage includes: when the cooking device is at the first heating stage, determining the water volume level of the cooking device as L1 when the pot pressure of the cooking device reaches a second predetermined pressure and the first cooking temperature is greater than a predetermined temperature; and determining the water volume level of the cooking device as L2 when the pot pressure of the cooking device reaches the second predetermined pressure and the first cooking temperature is smaller than or equal to the predetermined temperature.

Specifically, in the embodiment, when the cooking device is at the first heating stage, an amount of heat that needs to be absorbed increases as the water volume in the cooking device increases. Consequently, more heat will be unabsorbed in the cooking device having a low water volume, which results in a high temperature, while less heat will be unabsorbed in the cooking device having a high water volume, which results in a low temperature. Therefore, the water volume level of the cooking device is determined as L1 when the pot pressure of the cooking device reaches the second predetermined pressure P2 and the first cooking temperature Ta is greater than the predetermined temperature Tk. The water volume level of the cooking device is determined as L2 when the pot pressure of the cooking device reaches the second predetermined pressure P2 and the first cooking temperature Ta is smaller than or equal to the predetermined temperature Tk.

It should be noted that, in some embodiments, the predetermined temperature Tk of the present application may preferably be 50 °C. Further, the predetermined temperature Tk is not specifically limited in the present application. In addition, when the water volume level of the cooking device is determined as L1 or L2, the determination of the water volume level ends, and determination of the water volume level at other stages may not be made.

In some embodiments of the present application, the determining the water volume level of the cooking device based on the cooking parameter of the cooking stage includes: determining the water volume level of the cooking device as L3, when the cooking device is at the heating-stopping stage and the pot pressure of the cooking device reaches a third predetermined pressure.

Specifically, in the embodiment, the pressure sensor may be set to obtain the pot pressure. When the cooking device is at the heating-stopping stage, no heating power is adopted for heating, but the residual heat stored in the heating plate continues the heating. As the temperature rises, the pot pressure also continuously increases. Therefore, when the cooking device is at the heating-stopping stage and the pot pressure of the cooking device reaches the third predetermined pressure P3, the water volume level of the cooking device is determined as L3.

It should be noted that, when the water volume level of the cooking device is determined as L3, the determination of the water volume level ends, and determination of the water volume level at other stages may not be made.

Further, in some embodiments of the present application, the control method further includes: at a beginning of the heating-stopping stage of the cooking device, obtaining a second cooking temperature of the cooking device, at a beginning of the second heating stage of the cooking device, obtaining a third cooking temperature of the cooking device, and at an end of the second heating stage, obtaining a second duration of the cooking device at the second heating stage.

Specifically, in the embodiment, the temperature sensor may be set to obtain the second cooking temperature Tb and the third cooking temperature Tc, and the timer may be set to obtain the second duration tc. Therefore, at the beginning of the heating-stopping stage of the cooking device, the second cooking temperature Tb of the cooking device is obtained. At the beginning of the second heating stage of the cooking device, the third cooking temperature Tc of the cooking device is obtained. At the end of the second heating stage, the second duration tc of the cooking device at the second heating stage is obtained.

Further, in the embodiment, the determining the water volume level of the cooking device based on the cooking parameter of the cooking stage includes: at a beginning of the second heating stage of the cooking device, determining the water volume level of the cooking device as L3, when a difference between the third cooking temperature and the second cooking temperature is greater than a temperature threshold, or when the first duration of the cooking device at the first heating stage is smaller than or equal to a time threshold, otherwise, determining the water volume level of the cooking device as L5.

Specifically, in the embodiment, when the cooking stage is at the heating-stopping stage, the second cooking temperature Tb of the cooking device is obtained. In this case, since the residual heat from the heating plate releases heat for heating, a pot temperature continuously rises. Also, the water volume in the cooking device affects a magnitude of a temperature rise. In a case of a large water volume in the cooking device, a large amount of heat needs to be absorbed, which leads to a small increase in the pot temperature. In a case of a small water volume in the cooking device, a small amount of heat needs to be absorbed, which leads to a large increase in the pot temperature. In addition, when the cooking device is at the first heating stage, the heating is performed at the power k2. Different water volumes in the cooking device result in different heating time. That is, when the cooking device has a large water volume, a large amount of heat needs to be absorbed, which leads to long heating time. When the cooking device has a small water volume, a small amount of heat needs to be absorbed, which leads to short heating time. Therefore, at the beginning of the second heating stage of the cooking device, the water volume level of the cooking device is determined as L3, when the difference between the third cooking temperature Tc and the second cooking temperature Tb is greater than the temperature threshold m, or when the first duration ta of the cooking device at the first heating stage is smaller than or equal to the time threshold n, otherwise, the water volume level of the cooking device is determined as L5.

It should be noted that, in some embodiments, the temperature threshold m may preferably be 6 °C, and the time threshold n preferably ranges from 0 seconds to 600 seconds. Further, the temperature threshold m and the time threshold n are not specifically limited in the present application. In addition, when the water volume level of the cooking device is determined as L3, the determination of the water volume level ends, and determination of the water volume level at other stages may not be made.

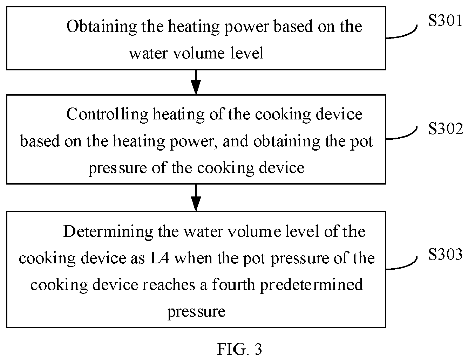

Further, in some embodiments of the present application, as illustrated in FIG. 3, the control method further includes the following operations at blocks, subsequent to the determining the water volume level of the cooking device as L5.

At S301, the heating power is obtained based on the water volume level.

Specifically, in the embodiment, subsequent to determination of the water volume of the cooking device as L5 at the beginning of the second heating stage, a specific water volume level needs to be further determined. Different water volume levels correspond to different heating power. A low water volume level corresponds to low heating power. A high water volume level corresponds to high heating power. Therefore, to achieve an optimal heating effect without wasting power, the heating power needs to be obtained based on the water volume level. When the second heating stage is entered under a condition that the water volume level is L5, the heating power of K4 at the second heating stage may be determined based on the water volume level of L5.

It should be noted that different water volume levels corresponding to each of the heating power of K4 at the second heating stage, the heating power of K5 at the pressure-boosting stage, and the heating power of K6 at the pressure-maintaining stage correspond to different heating power values. A specific correspondence is illustrated in Table 1, in which Q40 to Q48, Q50 to Q58, and Q60 to Q68 represent different power values.

**Table 1**

| Water volume levels | L0 | L1 | L2 | L3 | L4 | L5 | L6 | L7 | L8 |
|---|---|---|---|---|---|---|---|---|---|
| K4 | Q40 | Q41 | Q42 | Q43 | Q44 | Q45 | Q46 | Q47 | Q48 |
| K5 | Q50 | Q51 | Q52 | Q53 | Q54 | Q55 | Q56 | Q57 | Q58 |
| K6 | Q60 | Q61 | Q62 | Q63 | Q64 | Q65 | Q66 | Q67 | Q68 |

At S302, heating of the cooking device is controlled based on the heating power, and the pot pressure of the cooking device is obtained.

Specifically, in the embodiment, subsequent to obtaining of the heating power based on the water volume level, the heating of the cooking device may be controlled based on the heating power to achieve the optimal cooking result. In addition, the pressure sensor may be set to obtain the pot pressure of the cooking device.

At S303, the water volume level of the cooking device is determined as L4 when the pot pressure of the cooking device reaches a fourth predetermined pressure.

Specifically, in the embodiment, subsequent to controlling of the heating of the cooking device based on the heating power, the pressure of the cooking device increases continuously. Therefore, the water volume level of the cooking device is determined as L4 when the pot pressure of the cooking device reaches the fourth predetermined pressure P4.

Further, in some embodiments of the present application, the control method further includes: at the end of the second heating stage and when the pot pressure of the cooking device is below a fourth predetermined pressure, determining the water volume level of the cooking device based on the difference between the third cooking temperature and the second cooking temperature or the second duration of the second heating stage by looking up a table.

Specifically, in the embodiment, at the end of the second heating stage, i.e., when the duration of the second heating stage reaches the fourth predetermined time period t4, the pot pressure of the cooking device does not reach the fourth predetermined pressure due to an excessive water volume, a detection error, or the like. In this case, the water volume level of the cooking device is determined based on the difference between the third cooking temperature Tc and the second cooking temperature Tb or the second duration tc of the second heating stage by looking up the table. A correspondence between the differences between the third cooking temperatures Tc and the second cooking temperatures Tb and the water volume levels is illustrated in Table 2. A correspondence between the second durations tc at the second heating stage and the water volume levels is illustrated in Table 3.

**Table 2**

| Tc-Tb | >55 | 51-55 | 46-50 | 41-45 | 36-40 | 31-35 | 26-30 | 20-25 | <20 |
|---|---|---|---|---|---|---|---|---|---|
| Water volume levels | L0 | L1 | L2 | L3 | L4 | L5 | L6 | L7 | L8 |

**Table 3**

| tc | <100 | <100 | <100 | <100 | 100-159 | 160-239 | 240-319 | 320-400 | >400 |
|---|---|---|---|---|---|---|---|---|---|
| Water volume levels | L0 | L1 | L2 | L3 | L4 | L5 | L6 | L7 | L8 |

Further, in some embodiments of the present application, the water volume level of the cooking device is controlled as L0 when the cooking device initiates the cooking function.

Specifically, in the embodiment, when the cooking device initiates the cooking function, the water volume level of the cooking device is controlled as L0. That is, an initial water volume level is L0. Then, the detection stage is entered to determine the pot pressure. When the cooking device is at the detection stage and the pot pressure reaches the predetermined pressure, the water volume level of the cooking device is determined as L0. Otherwise, when the duration of the cooking device at the detection stage reaches the first predetermined time period t1, the cooking device is controlled to enter the first heating stage and the timing is performed.

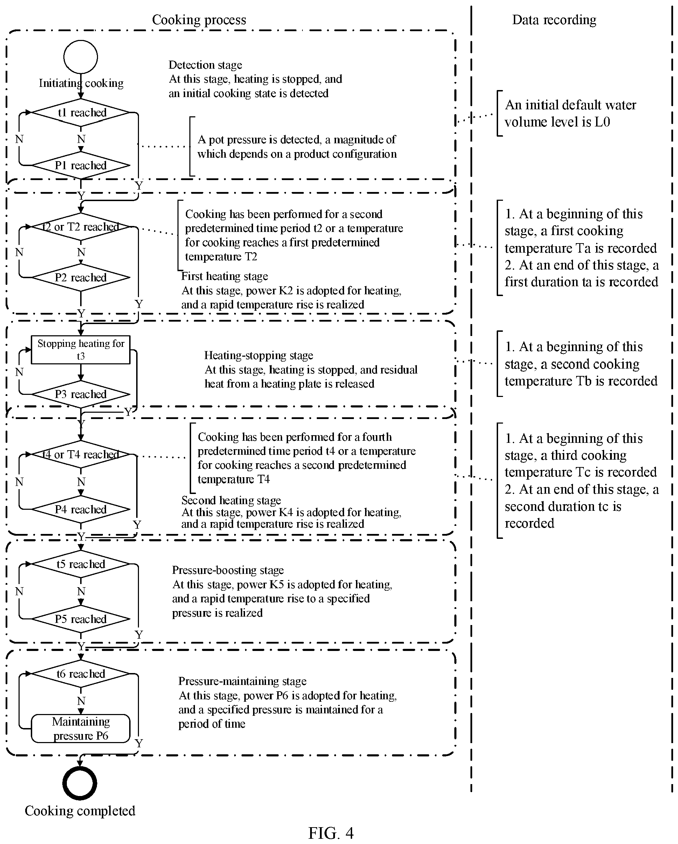

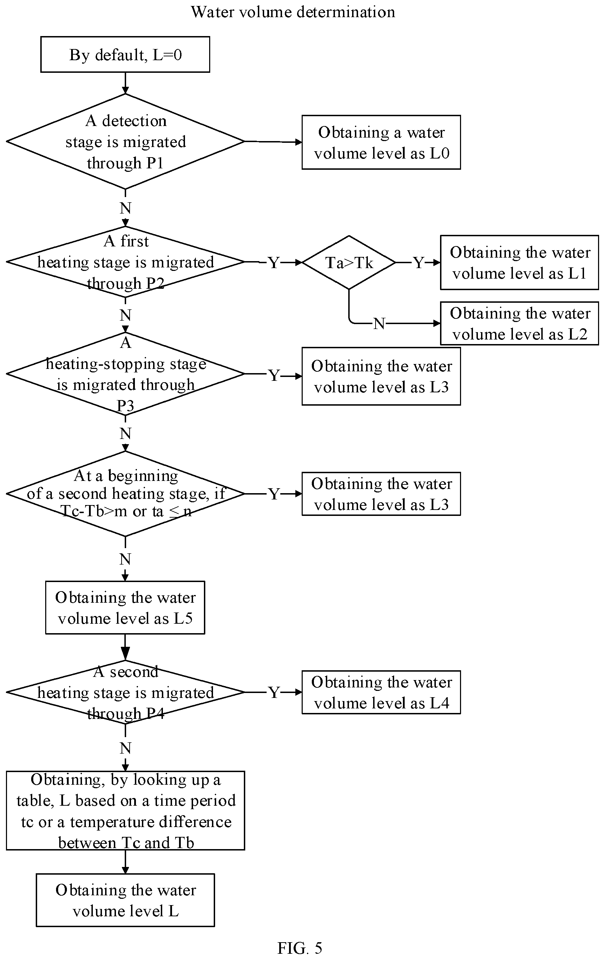

In summary, as illustrated in FIG. 4 and FIG. 5, when the cooking device initiates the cooking function, an initial default water volume level is L0. The cooking device is controlled to enter the detection stage subsequent to an initiation of the cooking function. When the pot pressure of the cooking device reaches the first predetermined pressure P1 at the detection stage, the water volume level of the cooking device is determined as L0. Therefore, the determination of the water volume level ends, and the first heating stage is entered. Otherwise, when the duration of the cooking device at the detection stage reaches the first predetermined time period t1, the first heating stage is entered.

At the beginning of the first heating stage, the first cooking temperature Ta is recorded. At the end of the first heating stage, the first duration ta is recorded. Subsequent to entry into the first heating stage, the cooking device performs heating at the power K2, and thus the pot temperature rises rapidly. As the temperature rises, the pot pressure of the cooking device also increases. When the pot pressure of the cooking device reaches the second predetermined pressure P2, a magnitude of the first cooking temperature Ta is compared with a magnitude of the predetermined temperature Tk. When the first cooking temperature Ta is greater than the predetermined temperature Tk, the water volume level of the cooking device is determined as L1, and the determination of the water volume level ends. When the first cooking temperature Ta is smaller than or equal to the predetermined temperature Tk, the water volume level of the cooking device is determined as L2, and the determination of the water volume level ends. When the pot pressure of the cooking device is below the second predetermined pressure P2, the heating-stopping stage is entered when the duration of the cooking device at the first heating stage reaches the second predetermined time period t2.

At the beginning of the heating-stopping stage, the second cooking temperature Tb is recorded. At the heating-stopping stage, the cooking device stops heating, and the residual heat from the heating plate is released for heating. As the temperature rises, the pot pressure of the cooking device also increases. When the pot pressure of the cooking device reaches the third predetermined pressure P3, the water volume level of the cooking device is determined as L3, and the determination of the water volume level ends. When the pot pressure of the cooking device does not reach the third predetermined pressure P3, the second heating stage is entered when the duration of the cooking device at the heating-stopping stage reaches the third predetermined time period t3.

At the beginning of the second heating stage, the third cooking temperature Tc is recorded. At the end of the second heating stage, the second duration tc is recorded. Subsequent to entry into the second heating stage, when the difference between the third cooking temperature Tc and the second cooking temperature Tb is greater than the temperature threshold m, or when the first duration ta of the cooking device at the first heating stage is smaller than or equal to the time threshold n, the water volume level of the cooking device is determined as L3, and the determination of the water volume level ends. Otherwise, the water volume level of the cooking device is determined as L5. Then the method proceeds to a next step to determine the water volume. According to Table 1 in the above embodiment, the power K4 is obtained when the water volume level is L5. Then, the heating is performed based on the power K4 to rapidly raise the pot temperature. When the pot pressure of the cooking device reaches the fourth predetermined pressure P4, the water volume level of the cooking device is determined as L4, and the determination of the water volume level ends. When the pot pressure of the cooking device is below the fourth predetermined pressure P4, the water volume level of the cooking device is determined by looking up Table 2 or Table 3 in the above embodiments when the duration of the cooking device at the second heating stage reaches the fourth predetermined time period t4, or when the cooking temperature of the cooking device at the second heating stage reaches the second predetermined temperature T4, and the determination of the water volume level ends.

Subsequent to entry into the pressure-boosting stage, corresponding power K5 is obtained, by looking up Table 1 in the above embodiment, based on the water volume level determined at the second heating stage. Then, the heating is performed based on the power K5, such that the pot pressure of the cooking device reaches the fifth predetermined pressure P5 rapidly. When the pot pressure of the cooking device is below the fifth predetermined pressure P5, the cooking device is controlled to enter the pressure-maintaining stage and the timing is performed when the duration of the cooking device at the pressure-boosting stage reaches the fifth predetermined time period t5.

Subsequent to entry into the pressure-maintaining stage, corresponding power K6 is obtained, by looking up Table 1 in the above embodiment, based on the water volume level determined at the second heating stage. Then, the heating is performed based on the power K6, such that the pot pressure is maintained at the fifth predetermined pressure P6 set by the user. The cooking ends when the duration of the cooking device at the pressure-maintaining stage reaches a pressure-maintaining time period t6 set by the user.

In summary, with the control method for the cooking device according to the embodiments of the present application, the heating power of the cooking device is adjusted based on the water volume level, to meet the cooking demands of the cooking device at different water volumes. Therefore, the pressure overshoot can be avoided during quick cooking with a small water volume, while overall cooking time can be shortened for quick cooking with a large water volume.

Based on the control method for the cooking device according to the above-mentioned embodiments of the present application, the embodiments of the present application further provide a computer-readable storage medium. The computer-readable storage medium stores a control program for the cooking device. The control program for the cooking device, when executed by the processor, implements the control method for the cooking device according to the above-mentioned embodiments of the present application.

In summary, with the computer-readable storage medium according to the embodiments of the present application, the control program for the cooking device stored on the computer-readable storage medium is executed by the processor. Therefore, the pressure overshoot can be avoided during the quick cooking with the small water volume, while the overall cooking time can be shortened for the quick cooking with the large water volume.

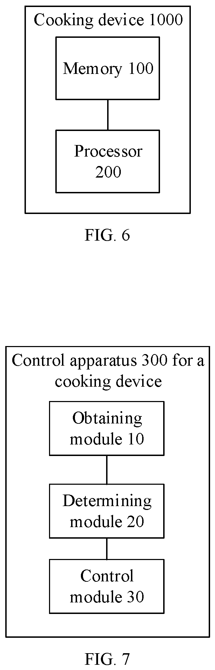

FIG. 6 is a schematic diagram showing a structure of a cooking device according to an embodiment of the present application.

Specifically, as illustrated in FIG. 6, a cooking device 1000 includes a memory 100, a processor 200, and a control program for the cooking device stored in the memory 100 and executable on the processor 200. The processor, when executing the control program, implements the control method for the cooking device according to the embodiments of the present application.

In summary, with the cooking device according to the embodiments of the present application, the control program for the cooking device stored in the memory is executed by the processor. Therefore, the pressure overshoot can be avoided during the quick cooking with the small water volume, while the overall cooking time can be shortened for the quick cooking with the large water volume.

FIG. 7 is a schematic diagram showing a structure of a control apparatus for a cooking device according to an embodiment of the present application.

As illustrated in FIG. 7, a control apparatus 300 for the cooking device includes an obtaining module 10, a determining module 20, and a control module 30.

The obtaining module 10 is configured to obtain a cooking parameter of the cooking device at each cooking stage when the cooking device initiates a cooking function. The determining module 20 is configured to determine a water volume level of the cooking device based on the cooking parameter of the cooking stage. The control module 30 is configured to adjust heating power of the cooking device based on the water volume level, to meet cooking demands of the cooking device at different water volumes.

In some embodiments of the present application, the cooking stage includes a detection stage, a first heating stage, a heating-stopping stage, a second heating stage, a pressure-boosting stage, and a pressure-maintaining stage. The cooking parameter includes a pot pressure of the cooking device, a duration of the cooking device at the cooking stage, and a cooking temperature of the cooking device at the cooking stage.

In some embodiments of the present application, the control module 30 is further configured to: control the cooking device to enter the detection stage subsequent to an initiation of the cooking function; control the cooking device to enter the first heating stage and perform timing when a duration of the cooking device at the detection stage reaches a first predetermined time period or when the pot pressure of the cooking device reaches a first predetermined pressure; control the cooking device to enter the heating-stopping stage and perform timing, when a duration of the cooking device at the first heating stage reaches a second predetermined time period, or when a cooking temperature of the cooking device at the first heating stage reaches a first predetermined temperature, or when the pot pressure of the cooking device reaches a second predetermined pressure, wherein the second predetermined pressure is greater than or equal to the first predetermined pressure; control the cooking device to enter the second heating stage and perform timing, when a duration of the cooking device at the heating-stopping stage reaches a third predetermined time period, or when the pot pressure of the cooking device reaches a third predetermined pressure, wherein the third predetermined pressure is greater than or equal to the second predetermined pressure; control the cooking device to enter the pressure-boosting stage and perform timing, when a duration of the cooking device at the second heating stage reaches a fourth predetermined time period, or when a cooking temperature of the cooking device at the second heating stage reaches a second predetermined temperature, or when the pot pressure of the cooking device reaches a fourth predetermined pressure, wherein the fourth predetermined pressure is greater than or equal to the third predetermined pressure; control the cooking device to enter the pressure-maintaining stage and perform timing, when a duration of the cooking device at the pressure-boosting stage reaches a fifth predetermined time period, or when the pot pressure of the cooking device reaches a fifth predetermined pressure, wherein the fifth predetermined pressure is greater than or equal to the fourth predetermined pressure; and control the cooking device to turn off the cooking function, when a duration of the cooking device at the pressure-maintaining stage reaches a sixth predetermined time period.

In some embodiments of the present application, the determining module 20 is specifically configured to: determine the water volume level of the cooking device as L0, when the cooking device is at the detection stage and the pot pressure of the cooking device reaches a first predetermined pressure.

In some embodiments of the present application, the obtaining module 10 is further configured to: at a beginning of the first heating stage of the cooking device, obtain a first cooking temperature of the cooking device, and at an end of the first heating stage, obtain a first duration of the cooking device at the first heating stage.

In some embodiments of the present application, the determining module 20 is specifically configured to: when the cooking device is at the first heating stage, determine the water volume level of the cooking device as L1 when the pot pressure of the cooking device reaches a second predetermined pressure and the first cooking temperature is greater than a predetermined temperature; and determine the water volume level of the cooking device as L2 when the pot pressure of the cooking device reaches the second predetermined pressure and the first cooking temperature is smaller than or equal to the predetermined temperature.

In some embodiments of the present application, the determining module 20 is specifically configured to: determine the water volume level of the cooking device as L3, when the cooking device is at the heating-stopping stage and the pot pressure of the cooking device reaches a third predetermined pressure.

In some embodiments of the present application, the obtaining module 10 is further configured to: at a beginning of the heating-stopping stage of the cooking device, obtain a second cooking temperature of the cooking device, at a beginning of the second heating stage of the cooking device, obtain a third cooking temperature of the cooking device, and at an end of the second heating stage, obtain a second duration of the cooking device at the second heating stage.

In some embodiments of the present application, the determining module 20 is specifically configured to: at a beginning of the second heating stage of the cooking device, determine the water volume level of the cooking device as L3, when a difference between the third cooking temperature and the second cooking temperature is greater than a temperature threshold, or when the first duration of the cooking device at the first heating stage is smaller than or equal to a time threshold, otherwise, determine the water volume level of the cooking device as L5.

In some embodiments of the present application, the obtaining module 10 is further configured to obtain, subsequent to determination of the water volume level of the cooking device as L5, the heating power based on the water volume level. The control module 30 is further configured to control heating of the cooking device based on the heating power. The obtaining module 10 is further configured to obtain the pot pressure of the cooking device. The determining module 20 is further configured to determine the water volume level of the cooking device as L4 when the pot pressure of the cooking device reaches a fourth predetermined pressure.

In some embodiments of the present application, the determining module 20 is further configured to: at the end of the second heating stage and when the pot pressure of the cooking device is below a fourth predetermined pressure, determine the water volume level of the cooking device based on the difference between the third cooking temperature and the second cooking temperature or the second duration of the second heating stage by looking up a table.

In some embodiments of the present application, the water volume level of the cooking device is controlled as L0 when the cooking device initiates the cooking function.

In summary, with the control apparatus for the cooking device according to the embodiments of the present application, the water volume level of the cooking device is accurately determined by the determining module based on the cooking parameter obtained by the obtaining module, and then the heating power of the cooking device is adjusted by the control module based on the water volume level, to meet the cooking demands of the cooking device at different water volumes. Therefore, the pressure overshoot can be avoided during the quick cooking with the small water volume, while the overall cooking time can be shortened for the quick cooking with the large water volume.

It should be noted that, reference to other specific embodiments of the control apparatus for the cooking device according to the embodiments of the present application can be made to the above-mentioned specific embodiments of the control method for the cooking device according to the embodiments of the present application. To reduce redundancy, details thereof will be omitted here.

In addition, other components and functions of the cooking device according to the embodiments of the present application are known to those skilled in the art. To reduce redundancy, details thereof will be omitted here.

It should be noted that, the logics and/or steps represented in the flowchart or described otherwise herein may be for example considered as a list of ordered executable instructions for implementing logic functions, and may be embodied in any computer-readable medium that is to be used by or used with an instruction execution system, apparatus, or device, such as a computer-based system, a system including a processor, or any other system that may retrieve and execute instructions from an instruction execution system, apparatus, or device. For the present application, a "computer-readable medium" may be any apparatus that may contain, store, communicate, propagate, or transmit a program to be used by or used with an instruction execution system, apparatus, or device. More specific examples of computer-readable mediums include, as a non-exhaustive list: an electrical connector (electronic device) with one or more wirings, a portable computer disk case (magnetic device), a Random Access Memory (RAM), a Read Only Memory (ROM), an Erasable Programmable Read Only Memory (EPROM or flash memory), a fiber optic device, and a portable Compact Disk Read Only memory (CDROM). In addition, the computer-readable medium may even be paper or other suitable medium on which the program may be printed, as the program may be obtained electronically, e.g., by optically scanning the paper or the other medium, and then editing, interpreting, or otherwise processing the scanning result when necessary, and then stored in a computer memory.

It can be appreciated that each part of the present application can be implemented in hardware, software, firmware or any combination thereof. In the above embodiments, a number of steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a Programmable Gate Array (PGA), a Field Programmable Gate Array (FPGA), etc.

In the present application, the description with reference to the terms "one embodiment", "some embodiments", "an example", "a specific example", or "some examples", etc., means that specific features, structures, materials, or characteristics described in conjunction with the embodiment(s) or example(s) are included in at least one embodiment or example of the present application. In the present application, any illustrative reference of the above terms does not necessarily refer to the same embodiment(s) or example(s). Moreover, the specific features, structures, materials, or characteristics as described can be combined in any one or more embodiments or examples as appropriate.

In the description of the present application, it should be understood that, the orientation or the position indicated by terms such as "central", "longitudinal", "lateral", "length", "width", "thickness", "over", "below", "front", "rear", "left", "right", "vertical", "horizontal", "top", "bottom", "inner", "outer", "clockwise", "anticlockwise", "axial", "radial", and "circumferential" should be construed to refer to the orientation and the position as shown in the drawings, and is only for the convenience of describing the present application and simplifying the description, rather than indicating or implying that the pointed device or element must have a specific orientation, or be constructed and operated in a specific orientation, and therefore cannot be understood as a limitation of the present application.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present application, "plurality" means at least two, such as two, three, etc., unless otherwise specifically defined.

In the present application, unless otherwise clearly stipulated and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present application may be understood according to specific circumstances.

In the present application, unless expressly stipulated and defined otherwise, the first feature "above" or "below" the second feature may mean that the first feature is in direct contact with the second feature, or the first and second features are in indirect contact through an intermediate between the first and second features. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is lower than that of the second feature.

Although embodiments of the present application have been shown and described above, it should be understood that the above-mentioned embodiments are exemplary and should not be construed as limiting the present application. Those skilled in the art can make changes, modifications, substitutions, and alternations to the above-mentioned embodiments within the scope of the present application.

## Claims

1. A control method for a cooking device, the control method comprising:
obtaining (S101) a cooking parameter of the cooking device at each cooking stage when the cooking device initiates a cooking function;
determining (S102) a water volume level of the cooking device based on the cooking parameter of the cooking stage; and
adjusting (S103) heating power of the cooking device based on the water volume level, to meet cooking demands of the cooking device at different water volumes.

2. The control method according to claim 1, wherein:
the cooking stage comprises a detection stage, a first heating stage, a heating-stopping stage, a second heating stage, a pressure-boosting stage, and a pressure-maintaining stage, and
the cooking parameter comprises a pot pressure of the cooking device, a duration of the cooking device at the cooking stage, and a cooking temperature of the cooking device at the cooking stage.

3. The control method according to claim 2, further comprising:
controlling (S201) the cooking device to enter the detection stage subsequent to an initiation of the cooking function, and controlling the cooking device to enter the first heating stage and performing timing when a duration of the cooking device at the detection stage reaches a first predetermined time period or when the pot pressure of the cooking device reaches a first predetermined pressure;
controlling (S202) the cooking device to enter the heating-stopping stage and performing timing, when a duration of the cooking device at the first heating stage reaches a second predetermined time period, or when a cooking temperature of the cooking device at the first heating stage reaches a first predetermined temperature, or when the pot pressure of the cooking device reaches a second predetermined pressure, wherein the second predetermined pressure is greater than or equal to the first predetermined pressure;
controlling (S203) the cooking device to enter the second heating stage and performing timing, when a duration of the cooking device at the heating-stopping stage reaches a third predetermined time period, or when the pot pressure of the cooking device reaches a third predetermined pressure, wherein the third predetermined pressure is greater than or equal to the second predetermined pressure;
controlling (S204) the cooking device to enter the pressure-boosting stage and performing timing, when a duration of the cooking device at the second heating stage reaches a fourth predetermined time period, or when a cooking temperature of the cooking device at the second heating stage reaches a second predetermined temperature, or when the pot pressure of the cooking device reaches a fourth predetermined pressure, wherein the fourth predetermined pressure is greater than or equal to the third predetermined pressure;
controlling (S205) the cooking device to enter the pressure-maintaining stage and performing timing, when a duration of the cooking device at the pressure-boosting stage reaches a fifth predetermined time period, or when the pot pressure of the cooking device reaches a fifth predetermined pressure, wherein the fifth predetermined pressure is greater than or equal to the fourth predetermined pressure; and
controlling (5206) the cooking device to turn off the cooking function, when a duration of the cooking device at the pressure-maintaining stage reaches a sixth predetermined time period.

4. The control method according to claim 2, wherein said determining the water volume level of the cooking device based on the cooking parameter of the cooking stage comprises:
determining the water volume level of the cooking device as L0, when the cooking device is at the detection stage and the pot pressure of the cooking device reaches a first predetermined pressure.

5. The control method according to claim 2, further comprising:
at a beginning of the first heating stage of the cooking device, obtaining a first cooking temperature of the cooking device, and
at an end of the first heating stage, obtaining a first duration of the cooking device at the first heating stage.

6. The control method according to claim 5, wherein said determining the water volume level of the cooking device based on the cooking parameter of the cooking stage comprises:
when the cooking device is at the first heating stage:
determining the water volume level of the cooking device as L1 when the pot pressure of the cooking device reaches a second predetermined pressure and the first cooking temperature is greater than a predetermined temperature; and
determining the water volume level of the cooking device as L2 when the pot pressure of the cooking device reaches the second predetermined pressure and the first cooking temperature is smaller than or equal to the predetermined temperature.

7. The control method according to claim 2, wherein said determining the water volume level of the cooking device based on the cooking parameter of the cooking stage comprises:
determining the water volume level of the cooking device as L3, when the cooking device is at the heating-stopping stage and the pot pressure of the cooking device reaches a third predetermined pressure.

8. The control method according to claim 5, further comprising:
at a beginning of the heating-stopping stage of the cooking device, obtaining a second cooking temperature of the cooking device,
at a beginning of the second heating stage of the cooking device, obtaining a third cooking temperature of the cooking device, and
at an end of the second heating stage, obtaining a second duration of the cooking device at the second heating stage.

9. The control method according to claim 8, wherein said determining the water volume level of the cooking device based on the cooking parameter of the cooking stage comprises:
at a beginning of the second heating stage of the cooking device, determining the water volume level of the cooking device as L3, when a difference between the third cooking temperature and the second cooking temperature is greater than a temperature threshold, or when the first duration of the cooking device at the first heating stage is smaller than or equal to a time threshold, otherwise, determining the water volume level of the cooking device as L5.

10. The control method according to claim 9, further comprising, subsequent to said determining the water volume level of the cooking device as L5:
obtaining (S301) the heating power based on the water volume level;
controlling (S302) heating of the cooking device based on the heating power, and obtaining the pot pressure of the cooking device; and
determining (S303) the water volume level of the cooking device as L4 when the pot pressure of the cooking device reaches a fourth predetermined pressure.

11. The control method according to claim 9, further comprising:
at the end of the second heating stage and when the pot pressure of the cooking device is below a fourth predetermined pressure, determining the water volume level of the cooking device based on the difference between the third cooking temperature and the second cooking temperature or the second duration of the second heating stage by looking up a table.

12. The control method according to any one of claims 1 to 11, wherein the water volume level of the cooking device is controlled as L0 when the cooking device initiates the cooking function.

13. A computer-readable storage medium, having a control program for a cooking device stored thereon, wherein the control program for the cooking device, when executed by a processor, implements the control method for the cooking device according to any one of claims 1 to 11.

14. A cooking device (1000), comprising a memory (100), a processor (200), and a control program for the cooking device (1000) stored in the memory (100) and executable on the processor (200), wherein the processor (200), when executing the control program, implements the control method for the cooking device according to any one of claims 1 to 11.

15. A control apparatus (300) for a cooking device, the control apparatus (300) comprising:
means for obtaining (10) a cooking parameter of the cooking device at each cooking stage when the cooking device initiates a cooking function;
means for determining (20) a water volume level of the cooking device based on the cooking parameter of the cooking stage; and
means for adjusting (30) heating power of the cooking device based on the water volume level, to meet cooking demands of the cooking device at different water volumes.
